# EUROPEAN PATENT SPECIFICATION

(11) **EP 2 009 047 B1**
(45) Date of publication and mention of the grant of the patent: **10.09.2014**
(21) Application number: 08011062.0
(22) Date of filing: 18.06.2008
(51) Int. Cl.: C08L 7/00, C08L 15/00, B60C 1/00, C08J 3/22

(54) **Rubber composition for side walls, method of producing the same, and pneumatic tire**
Gummizusammensetzung für Seitenwände, Verfahren zu ihrer Herstellung und Luftreifen
Composition de caoutchouc pour parois latérales, son procédé de production et pneumatique

(30) Priority: 29.06.2007 JP 2007173132
(43) Date of publication of application: 31.12.2008
(73) Proprietor: Sumitomo Rubber Industries, Ltd., Kobe-shi, Hyogo 651-0072 (JP)
(72) Inventor: Imoto, Yoji, Kobe-shi Hyogo 651-0072 (JP); Uesaka, Kenichi, Kobe-shi Hyogo 651-0072 (JP)
(74) Representative: Manitz, Finsterwald & Partner GbR

(56) References cited:
- EP-A1- 2 006 121
- EP-A1- 2 014 710

## Description

### BACKGROUND OF THE INVENTION

### Field of the Invention

The present invention relates to a rubber composition used in tires and a method of producing the same, and more particularly to a rubber composition for side walls of pneumatic tires and a method of producing the same. Also, the present invention relates to a pneumatic tire provided with a side wall rubber composed of the rubber composition.

### Description of the Related Art

Conventionally, into a rubber composition for side walls of tires, in addition to natural rubber (NR), polybutadiene rubber has been blended for a purpose of improving an anti-crack-growing property, and further carbon black has been blended for satisfying weather resistance and reinforcing properties. However, highly unsaturated rubber such as polybutadiene rubber has a property of undergoing depolymerization because of a double bond part reacting with ozone, and therefore raises a problem of generating cracks on a rubber surface by being left to stand or by traveling. In order to restrain such crack generation, there is known a technique of increasing an amount of an anti-crack property improving agent such as an antioxidant. However, with this method, blooms are generated, thereby changing a color of a tire surface to red brown and hence deteriorating an aesthetic appearance of the tire.

Durability and an anti-crack property of the tire can be improved with use of ethylene propylene diene rubber (EPDM) or a brominated styrene isobutyrene copolymer (BIMS) instead of polybutadiene rubber; however, such rubber raises a problem in the anti-crack-growing property while being excellent in the durability. Further, synthesized rubber such as polybutadiene rubber and carbon black described above are both source materials deriving from petroleum resources.

In recent years, more attention is paid to environmental problems, and restriction of the amount of exhausted carbon dioxide is being reinforced. Also, since the amount of existing petroleum is limited, there is a limit to the use of the source materials deriving from the petroleum resources. Such orientation of paying more attention to the environmental problems is by no means exceptional in the field of tires, so that there is a demand for development of rubber compositions for side walls in which a part or the whole of the currently used source materials deriving from the petroleum resources are replaced with source materials deriving from non-petroleum resources.

For example, Japanese Patent Laying-Open No. 2003-063206 discloses an ecological tire in which silica which is a non-petroleum resource material is used as a substitute material for carbon black. However, no consideration is given to the durability and the anti-crack-growing property in the rubber compositions for side walls. Further, Japanese Patent Laying-Open No. 07-118445 discloses a tire tread rubber composition containing liquid polyisoprene having a carboxyl group and/or liquid polybutadiene having a carboxyl group. However, these rubber compositions are not for side walls, and moreover, no consideration is given to the durability and the anti-crack-growing property.

EP 2014710 A1 is a prior art document under Article 54 (3) EPC and discloses a rubber composition for a carcass ply or a band comprising 20 to 80 parts by mass of silica based on 100 parts by mass of a rubber component consisting of 5 to 70 parts by mass of a liquid rubber and 95 to 30 parts by mass of a solid rubber component, wherein the solid rubber component contains 30 to 100 % by mass of a natural rubber component containing at least one of a natural rubber and a modified natural rubber, wherein the modified natural rubber is preferably an epoxidized natural rubber.

EP 2 006 121 A1 is a prior art document under Article 54 (3) EPC and relates to a rubber composition for a sidewall comprising a solid rubber component comprising a natural rubber component consisting of 30 to 70 % by mass of a natural rubber and 30 to 70 % by mass of a modified natural rubber, which is preferably epoxidized natural rubber, and 20 to 60 phr of silica and 3 to 60 phr of a liquid rubber.

### SUMMARY OF THE INVENTION

The present invention has been made in order to solve the aforementioned problems of the conventional art, and an object thereof is to provide a rubber composition for side walls having excellent durability and an excellent anti-crack-growing property in which sufficient consideration is given to resource saving and environment protection by raising a content of source materials deriving from non-petroleum resources, a method of producing the same, and a pneumatic tire provided with a side wall rubber composed of the rubber composition.

The present invention provides a rubber composition for side walls containing 100 parts by mass of a first rubber component consisting of 30 to 70 mass % of natural rubber and 70 to 30 mass % of epoxidized natural rubber, 20 to 60 parts by mass of silica, and 3 to 60 parts by mass of a second rubber component consisting of liquid rubber, wherein the liquid rubber is a hydrogenated product of depolymerized natural rubber.

Also, the present invention provides a method of producing any one of the above-described rubber compositions for side walls, the method including a first mixing step of kneading at least natural rubber and silica, and a second mixing step of mixing epoxidized natural rubber with a kneaded product obtained in the first mixing step.

In the second mixing step, the kneaded product obtained in the first mixing step is preferably mixed with a kneaded product made of epoxidized natural rubber and liquid rubber.

Further, the present invention provides a pneumatic tire provided with a side wall rubber consisting of the rubber composition.

According to the present invention, there are provided a rubber composition for side walls having excellent durability and an excellent anti-crack-growing property in which sufficient consideration is given to resource saving and environment protection by raising the content of source materials deriving from non-petroleum resources, and a pneumatic tire provided with a side wall rubber consisting of the rubber composition.

The foregoing and other objects, features, aspects and advantages of the present invention will become more apparent from the following detailed description of the present invention when taken in conjunction with the accompanying drawing.

### BRIEF DESCRIPTION OF THE DRAWING

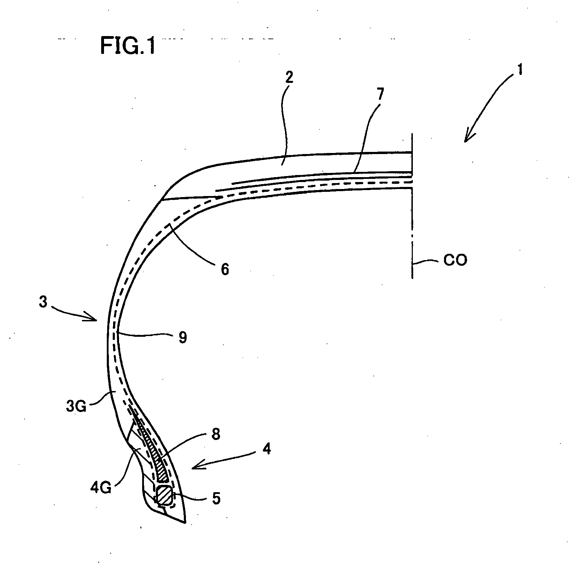

Fig. 1 is a schematic cross-sectional view showing one example of a pneumatic tire according to the present invention.

### DESCRIPTION OF THE PREFERRED EMBODIMENTS

### <First rubber component>

A first rubber component consists of 30 to 70 mass % of natural rubber (NR) and 70 to 30 mass % of epoxidized natural rubber (ENR).

Conventional natural rubber used in the field of rubber industry may be used as the natural rubber (NR), examples of which include natural rubber of grades such as KR7, TSR20, and the like.

A content ofNR in the first rubber component is 30 to 70 mass %. When the content ofNR is less than 30 mass %, a product tends to fail to reach a targeted performance. Also, when the content of NR exceeds 70 mass %, low fuel cost characteristics tend to be aggravated. The content ofNR is preferably 40 to 60 mass %.

The epoxidized natural rubber (ENR) is one in which an unsaturated double bond of natural rubber (NR) is epoxidized, whereby a molecular cohesive force increases by an epoxy group which is a polar group. For this reason, ENR has a glass transition point (Tg) higher than natural rubber, and also is excellent in mechanical strength, anti-abrasion property, and anti-air-permeation property. In particular, in a case where silica is blended into the rubber composition, it is possible to obtain a mechanical strength and an anti-abrasion property of a degree same as in a case where carbon black is blended into the rubber composition, due to a reaction of a silanol group on a silica surface with the epoxy group of epoxidized natural rubber.

As the epoxidized natural rubber (ENR), commercially available one or natural rubber (NR) subjected to epoxidation may be used. The method for epoxidation ofNR is not particularly limited, but there may be raised as examples the chlorohydrin method, the direct oxidation method, the hydrogen peroxide method, the alkyl hydroperoxide method, the peracid method, and the like. The peracid method includes a method of allowing natural rubber to react with perorganic acid such as peracetic acid or performic acid.

An epoxidation ratio of the epoxidized natural rubber (ENR) is not particularly limited, but the ratio is preferably 10 mol% or higher, and more preferably 25 mol% or higher. On the other hand, the epoxidation ratio of epoxidized natural rubber (ENR) is preferably 80 mol% or lower. It is difficult to prepare ENR having the epoxidation ratio exceeding 80 mol% because a cut of molecular chains occurs, thereby inevitably lowering the molecular weight of the rubber. The epoxidation ratio of epoxidized natural rubber (ENR) refers to (the number of epoxidized double bonds) / (the number of double bonds prior to epoxidation). Specifically, preferably used is ENR having an epoxidation ratio of 25 mol% (ENR25) or ENR having an epoxidation ratio of 50 mol% (ENR50).

In the present invention, only one kind of ENR may be used, or there may be used two or more kinds of ENR each having an epoxidation ratio different from each other.

The content of ENR in the first rubber component is 70 to 30 mass %, and is preferably 60 to 40 mass %.

### <Second rubber component>

The rubber composition for side walls according to the present invention consists of liquid rubber as a second rubber component. By addition of liquid rubber, an excellent anti-crack-growing property can be imparted, and also durability such as heat resistance, ozone resistance, and an anti-crack property can be improved.

According to the present invention, the liquid rubber is a hydrogenated product of depolymerized natural rubber.

The number-average molecular weight of the liquid rubber is not particularly limited but it is preferably 20,000 to 80,000.

The liquid natural rubber can be obtained by depolymerization of natural rubber (NR) according to a conventionally known method. Specifically, the liquid natural rubber can be obtained by depolymerization of natural rubber (NR) under a high-pressure and high-temperature condition with use of an autoclave.

Because of the use of a hydrogenated product the number of double bonds in the whole rubber component decreases, so that the ozone resistance can be further improved.

The added amount of the second rubber component is 3 to 60 parts by mass relative to 100 parts by mass of the first rubber component. When the added amount of the second rubber component is less than 3 parts by mass, improvement in durability and anti-crack-growing property will be insufficient. On the other hand, when the added amount of the second rubber component exceeds 60 parts by mass, physical properties thereof tend to be deteriorated. The added amount of the second rubber component is preferably 10 to 30 parts by mass relative to 100 parts by mass of the first rubber component.

The rubber composition for side walls according to the present invention may contain other rubber components such as other modified natural rubber (for example, deproteinized natural rubber) and diene-based synthetic rubber in addition to the above-described first and second rubber components. As the diene-based synthetic rubbers, there may be raised as examples styrene butadiene rubber (SBR), polybutadiene rubber (BR), styrene isoprene copolymer rubber, chloroprene rubber (CR), acrylonitrile butadiene rubber (NBR), halogenated butyl rubber (X-IIR), and a halogenated product of a copolymer of isobutyrene with p-methylstyrene. Among these, preferably used are polybutadiene rubber (BR) and styrene butadiene rubber (SBR).

However, in consideration of resource saving and environment protection, it is more preferable not containing diene-based synthetic rubber in view of raising the content of source materials deriving from non-petroleum resources.

### <Silica>

The rubber composition for side walls according to the present invention contains silica. Silica functions as a reinforcing filler. Blending silica improves a mechanical strength of the obtained side wall rubber.

Silica may be one prepared by the wet method, or may be one prepared by the dry method.

A BET specific surface area of silica is preferably 80 m²/g or larger, and more preferably is 150 m²/g or larger. When the BET specific surface area of silica is smaller than 80 m²/g, improvement in mechanical strength tends to be insufficient. Specifically, preferably used is Ultrasil VN2 manufactured by Tegussa Co. (BET specific surface area: 125 m²/g) or Ultrasil VN3 manufactured by Tegussa Co. (BET specific surface area: 175 m²/g).

The content of silica is 20 parts by mass or higher relative to 100 parts by mass of the first rubber component. When the content of silica is lower than 20 parts by mass, a sufficient reinforcing effect cannot be expected. On the other hand, the content of silica is 60 parts by mass or lower relative to 100 parts by mass of the first rubber component. When the content of silica exceeds 60 parts by mass, a dispersion property tends to be deteriorated. The content of silica is more preferably 50 parts by mass or lower relative to 100 parts by mass of the first rubber component.

### <Silane coupling agent>

A silane coupling agent is preferably blended together with silica into the rubber composition for side walls according to the present invention. As the silane coupling agent, it is possible to use a conventionally known silane coupling agent. Examples thereof include sulfide-based silan coupling agent such as bis(3-triethoxysilylpropyl) tetrasulfide, bis(2-triethoxysilylethyl) tetrasulfide, bis(4-triethoxysilylbutyl) tetrasulfide, bis(3-trimethoxysilylpropyl) tetrasulfide, bis(2-trimethoxysilylethyl) tetrasulfide, bis(4-trimethoxysilylbutyl) tetrasulfide, bis(3-triethoxysilylpropyl) trisulfide, bis(2-triethoxysilylethyl) trisulfide, bis(4-triethoxysilylbutyl) trisulfide, bis(3-trimethoxysilylpropyl) trisulfide, bis(2-trimethoxysilylethyl) trisulfide, bis(4-trimethoxysilylbutyl) trisulfide, bis(3-triethoxysilylpropyl) disulfide, bis(2-triethoxysilylethyl) disulfide, bis(4-triethoxysilylbutyl) disulfide, bis(3-trimethoxysilylpropyl) disulfide, bis(2-trimethoxysilylethyl) disulfide, bis(4-trimethoxysilylbutyl) disulfide, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 2-trimethoxysilylethyl-N,N-dimethylthiocarbamoyl tetrasulfide, 3-trimethoxysilylpropylbenzothiazolyl tetrasulfide, 3-triethoxysilylpropylbenzothiazol tetrasulfide, and 3-trimethoxysilylpropylmethacrylate monosulfide; mercapto-based silane coupling agent such as 3-mercaptopropyltrimethoxysilane, 3-mercaptopropyltriethoxysilane, 2-mercaptoethyltrimethoxysilane, and 2-mercaptoethyltriethoxysilane; vinyl-based silane coupling agent such as vinyltriethoxysilane and vinyltrimethoxysilane; amino-based silane coupling agent such as 3-aminopropyltriethoxysilane, 3-aminopropyltrimethoxysilane, 3-(2-aminoethyl)aminopropyltriethoxysilane, and 3-(2-aminoethyl)aminopropyltrimethoxysilane; glycidoxy-based silane coupling agent such as γ-glycidoxypropyltriethoxysilane, γ-glycidoxypropyltrimethoxysilane, γ -glycidoxypropylmethyldiethoxysilane, and γ-glycidoxypropylmethyldimethoxysilane; nitro-based silane coupling agent such as 3-nitropropyltrimethoxysilane and 3-nitropropyltriethoxysilane; and chloro-based silane coupling agent such as 3-chloropropyltrimethoxysilane, 3-chloropropyltriethoxysilane, 2-chloroethyltrimethoxysilane, and 2-chloroethyltriethoxysilane. These silane coupling agents may be used either alone or as a combination of two or more kinds.

Among these, Si69 (bis(3-triethoxysilylpropyl) tetrasulfide) and Si266 (bis(3-triethoxysilylpropyl) disulfide) manufactured by Tegussa Co. are preferably used in view of excellent processability.

The content of the silane coupling agent is preferably 0.5 part by mass or higher, and more preferably 2 parts by mass or higher, relative to 100 parts by mass of silica. When the content is lower than 0.5 part by mass, a mechanical strength of the rubber tends to be insufficiently improved. On the other hand, the content of the silane coupling agent is preferably 20 parts by mass or lower, and more preferably 10 parts by mass or lower, relative to 100 parts by mass of silica. When the content exceeds 20 parts by mass, viscosity of the rubber decreases considerably, whereby processability of the rubber tends to be adversely affected.

### <Carbon black>

The rubber composition for side walls according to the present invention may contain carbon black. A BET specific surface area of the carbon black is preferably 30 m²/g or larger, and more preferably 50 m²/g or larger. When the BET specific surface area of the carbon black is smaller than 30 m²/g, improvement in rubber strength and in rubber hardness tends to be insufficient.

A DBP (dibutyl phthalate) oil absorption amount of the carbon black is preferably 30 to 100 ml/100g, and more preferably 50 to 80 ml/100g.

When the rubber composition for side walls according to the present invention contains carbon black, the content thereof is preferably 100 parts by mass or lower, and more preferably 80 parts by mass or lower, relative to 100 parts by mass of the first rubber component. By addition of the carbon black, it is possible to improve the rubber strength and the rubber hardness. However, in view of resource saving and environment protection, it is preferable not to contain carbon black.

### <Other blended agents>

The rubber composition for side walls according to the present invention may contain additives other than the above-described components, such as a vulcanizer, a vulcanization promoter, stearic acid, oil, wax, antioxidant, zinc white.

As the vulcanizer, it is possible to use organic peroxide or a sulfur-based vulcanizer. As the organic peroxide, it is possible to use, for example, benzoyl peroxide, dicumyl peroxide, di-t-butyl peroxide, t-butylcumyl peroxide, methyl ethyl ketone peroxide, cumene hydroperoxide, 2,5-dimethyl-2,5-di(t-butylperoxy)hexane, 2,5-dimethyl-2,5-di(benzoylperoxy) hexane, 2,5-dimethyl-2,5-di(t-butylperoxy) hexyne-3, 1,3-bis(t-butylperoxypropyl)benzene, di-t-butylperoxy-diisopropylbenzene, t-butylperoxybenzene, 2,4-dochlorobenzoyl peroxide, 1,1-di-t-butylperoxy-3,3,5-trimethylsiloxane, n-butyl-4,4-di-t-butylperoxyvalerate. Among these, dicumyl peroxide, t-butylperoxybenzene, and di-t-butylperoxy-diisopropylbenzene are preferably used. As the sulfur-based vulcanizer, it is possible to use, for example, sulfur, morpholine disulfide. Among these, sulfur is preferably used. These vulcanizers may be used either alone or as a combination of two or more kinds.

As the vulcanization promoter, it is possible to use, for example, what contains at least one of sulfeneamide-based, thiazole-based, thiuram-based, thiourea-based, guanidine-based, dithiocarbamic acid-based, aldehyde-amine-based, aldehyde-ammonia-based, imidazoline-based, and xanthate-based vulcanization promoters. As the sulfeneamide-based vulcanization promoter, it is possible to use, for example, a sulfeneamide-based compound such as CBS (N-cyclohexyl-2-benzothiazylsulfeneamide), TBBS (N-tert-butyl-2-benzothiazylsulfeneamide), N,N-dicyclohexyl-2-benzothiazylsulfeneamide, N-oxydiethylene-2-benzothiazylsulfeneamide, or N,N-diisopropyl-2-benzothiazylsulfeneamide). As the thiazole-based vulcanization promoter, it is possible to use, for example, a thiazole-based compound such as MBT (2-mercaptobenzothiazole), MBTS (dibenzothiazyl disulfide), sodium salt, zinc salt, copper salt, or cyclohexylamine salt of 2-mercaptobenzothiazole, 2-(2,4-dinitrophenyl)mercaptobenzothiazole, or 2-(2,6-diethyl-4-morpholinothio)benzothiazole. As the thiuram-based vulcanization promotor, it is possible to use, for example, a thiuram-based compound such as TMTD (tetramethylthiuram disulfide), tetraethylthiuram disulfide, tetramethylthiuram monosulfide, dipentamethylenethiuram disulfide, dipentamethylenethiuram monosulfide, dipentamethylenethiuram tetrasulfide, dipentamethylenethiuram hexasulfide, tetrabutylthiuram disulfide, or pentamethylenethiuram tetrasulfide. As the thiourea-based vulcanization promotor, it is possible to use, for example, a thiourea compound such as thiacarbamide, diethylthiourea, dibutylthiourea, trimethylthiourea, or diorthotolylthiourea. As the guanidine-based vulcanization promotor, it is possible to use, for example, a guanidine-based compound such as diphenylguanidine, diorthotolylguanidine, triphenylguanidine, orthotolylbiguanide, or diphenylguanidine phthalate. As the dithiocarbamic acid-based vulcanization promotor, it is possible to use, for example, a dithiocarbamic acid-based compound such as zinc ethylphenyldithiocarbamate, zinc butylphenyldithiocarbamate, sodium dimethyldithiocarbamate, zinc dimethyldithiocarbamate, zinc diethyldithiocarbamate, zinc dibutyldithiocarbamate, zinc diamyldithiocarbamate, zinc dipropyldithiocarbamate, complex salt of zinc pentamethylenedithiocarbamate and piperidine, zinc hexadecyl(or octadecyl)isopropyldithiocarbamate, zinc dibenzyldithiocarbamate, sodium diethyldithiocarbamate, piperidine pentamethylenedithiocarbamate, selenium dimethyldithiocarbamate, tellurium diethyldithiocarbamate, or cadmium diamyldithiocarbamate. As the aldehyde-amine-based or aldehyde-ammonia-based vulcaniztion promotor, it is possible to use, for example, an aldehyde-amine-based or aldehyde-ammonia-based compound such as acetaldehyde-aniline reaction product, butylaldehyde-aniline condensation product, hexamethylenetetramine, or acetaldehyde-ammonia reaction product. As the imidazoline-based vulcanization promotor, it is possible to use, for example, an imidazoline-based compound such as 2-mercaptoimidazoline. As the xanthate-based vulcanization promotor, it is possible to use, for example, a xanthate-based compound such as zinc dibutylxanthate. These vulcanization promoters may be used either alone or as a combination of two or more kinds.

As the antioxidant, it is possible to appropriately select and use amine-based, phenol-based, imidazole-based, carbamic acid metal salts.

As the oil, it is possible to use, for example, processed oil, vegetable oil and fat, or a mixture thereof. As the processed oil, there may be raised as examples thereof paraffin-based processed oil, naphthene-based processed oil, aromatic-based processed oil. As the vegetable oil and fat, there may be raised as examples thereof castor oil, cotton-seed oil, linseed oil, rapeseed oil, soybean oil, palm oil, coconut oil, arachis oil, rosin, pine oil, pine tar, tall oil, corn oil, rice oil, red flower oil, sesame oil, olive oil, sunflower oil, palm nucleus oil, tsubaki oil, jojoba oil, macadamia nut oil, saflower oil, tung oil.

Described below is a method of preparing the rubber composition for side walls according to the present invention. The method of preparing the rubber composition for side walls according to the present invention preferably includes the following steps: (1) a first mixing step of kneading at least natural rubber (NR) and silica, and (2) a second mixing step of mixing epoxidized natural rubber (ENR) with a kneaded product obtained in the first mixing step.

In the first mixing step, it is possible to add additives other than described above in addition to natural rubber (NR) and silica. However, the vulcanizer and the vulcanization promoter are preferably added after the second mixing step (that is, in the third mixing step).

In the second mixing step, it is preferable that the kneaded product obtained in the first mixing step is mixed with a kneaded product obtained by mixing epoxidized natural rubber (ENR) and liquid rubber in advance. According to such an addition technique, a rubber composition is obtained in a state where an island phase consisting of epoxidized natural rubber (ENR) and liquid rubber is dispersed in a sea phase consisting of natural rubber (NR), thereby realizing improvement in anti-bending-crack-growing property as well as tear strength (anti-crack property).

The pneumatic tire according to the present invention is provided with a side wall rubber consisting of the above-described rubber composition for side walls according to the present invention. Hereinafter, with reference to Fig. 1, the pneumatic tire according to the present invention will be described. Fig. 1 exemplifies the pneumatic tire according to the present invention, in a cross-sectional view exemplifying a left half of the pneumatic tire. A pneumatic tire 1 has a structure including a tread part 2 provided with a cap tread part and a base tread part, a pair of side wall parts 3 each extending inwardly in a tire radial direction from each ends of tread part 2, and a bead part 4 located at an inner end of each side wall part 3. A carcas 6 is extended between bead parts 4, 4, and a belt layer 7 having a retainer band effect to reinforce tread part 2 is disposed outside of carcas 6 and inside tread part 2.

Carcas 6 is formed of one or more sheets of carcas plies in which carcas cords are arranged, for example, at an angle of 70 to 90° relative to a tire equator CO. These carcas plies pass from tread part 2 through side wall part 3, and are folded from an inside to an outside in a tire axis direction around bead core 5 of bead part 4 to be stopped.

Belt layer 7 is made of two or more sheets of belt plies in which belt cords are arranged, for example, at an angle of 40° or less relative to tire equator CO, and the belt cords are superposed in different directions so as to cross among the plies.

At bead part 4, a bead apex rubber 8 extending outwards in the radial direction from bead core 5 is disposed; an inner liner rubber 9 that forms a tire inner cavity surface is disposed adjacently inside carcas 6; and the outside of carcas 6 is protected with a clinch rubber 4G and a side wall rubber 3G.

The rubber composition for side walls according to the present invention is used as side wall rubber 3G.

Fig. 1 exemplifies a pneumatic tire for a vehicle, but the present invention is not limited thereto, and there are provided pneumatic tires used for various vehicles such as vehicles, trucks, buses, weight-vehicles.

The pneumatic tire according to the present invention is produced in a conventionally known method with use of the rubber composition for side walls according to the present invention. Namely, the rubber composition containing the above-described essential components and other blended agents that are blended if necessary is kneaded and subjected to a extrusion process to conform to a shape of the side wall part of the tire at a non-vulcanized state, and then is molded together with the other members of the tire on a tire molding machine in an ordinary method to form an unvulcanized tire. This unvulcanized tire is heated and pressed in a vulcanizing machine to obtain the pneumatic tire according to the present invention.

The pneumatic tire according to the present invention can be suitably used, for example, in a vehicle as an "ecological tire" that is mild to the earth environment because there is used the rubber composition as the side wall rubber in which the content of source materials deriving from non-petroleum resources is higher; sufficient consideration is given to resource saving and environment protection; and durability (heat resistance, anti-crack property, ozone resistance, and in anti-crack-growing property are excellent.

Hereinafter, the present invention will be described in greater detail by raising Examples and Comparative Examples; however, the present invention is not limited thereto.

### Examples

### <Examples 1 to 10>

In accordance with blending formulations shown in the Table 1, components shown in the "first mixing step" of the Table 1 were filled into a 1.7 L Banbury mixer so that the filling ratio became 58%, and the mixture was kneaded for 3 minutes at a rotational frequency of 80 rpm until the temperature reached 140°C to obtain a kneaded product 1 (first mixing step). Next, components shown in the "second mixing step" of the Table 1 were filled into a 1.7 L Banbury mixer so that the filling ratio became 58%, and the mixture was kneaded for 5 minutes at a rotational frequency of 80 rpm until the temperature reached 120°C to obtain a kneaded product 2. Subsequently, after kneaded product 1 and kneaded product 2 were kneaded with use of a roll (second mixing step), a vulcanizer (sulfur) and a vulcanization promoter were further mixed under a condition of 50°C with use of an 8-inch roll (third mixing step). Then, the unvulcanized rubber composition was vulcanized at 160°C for 20 minutes to fabricate vulcanized rubber sheets of Examples 1 to 10.

### <Comparative Example 1>

In accordance with the blending formulation shown in the Table 1, components shown in the "first mixing step" of the Table 1 were filled into a 1.7 L Banbury mixer so that the filling ratio became 58%, and the mixture was kneaded for 3 minutes at a rotational frequency of 80 rpm until the temperature reached 140°C to obtain a kneaded product 1 (first mixing step). Subsequently, after a vulcanizer (sulfur) and a vulcanization promoter were mixed under a condition of 40°C and 30 rpm with use of an 8-inch roll (third mixing step; Comparative Example 1 does not have a second mixing step), the unvulcanized rubber composition was vulcanized at 160°C for 20 minutes to fabricate a vulcanized rubber sheet of Comparative Example 1.

**Table 1**

| | | | | Examples | | | | | | | | | | Comparative Example |
|---|---|---|---|---|---|---|---|---|---|---|---|---|---|---|
| | | | | 1* | 2* | 3* | 4* | 5 | 6* | 7* | 8* | 9* | 10 | 1 |
| Blended amount (parts by mass) | First mixing step | Natural rubber (NR) | | 60 | 60 | 60 | 60 | 60 | 60 | 60 | 60 | 60 | 60 | 60 |
| | | END25 | | | | | | | | | | | | 40 |
| | | Silica | | 28 | 28 | 28 | 28 | 28 | 28 | 28 | 28 | 28 | 28 | 28 |
| | | Silane coupling agent | | 2.3 | 2.3 | 2.3 | 2.3 | 2.3 | 2.3 | 2.3 | 2.3 | 2.3 | 2.3 | 2.3 |
| | | Antioxidant | | 2.5 | 2.5 | 2.5 | 2.5 | 2.5 | 2.5 | 2.5 | 2.5 | 2.5 | 2.5 | 2.5 |
| | | Stearic acid | | 2.5 | 2.5 | 2.5 | 2.5 | 2.5 | 2.5 | 2.5 | 2.5 | 2.5 | 2.5 | 2.5 |
| | | Zinc white | | 3 | 3 | 3 | 3 | 3 | 3 | 3 | 3 | 3 | 3 | 3 |
| | Second mixing step | ENR25 | | 40 | 40 | 40 | 40 | 40 | | | | | | |
| | | ENR50 | | | | | | | 40 | 40 | 40 | 40 | 40 | 40 |
| | | PX300N | | 10 | | | | | 10 | | | | | |
| | | LIR | | | 10 | | | | | 10 | | | | |
| | | LNR | | | | 10 | | | | | 10 | | | |
| | | H-LIR | | | | | 10 | | | | | 10 | | |
| | | H-LNR | | | | | | 10 | | | | | 10 | |
| | Third mixing step | Sulfur | | 2 | 2 | 2 | 2 | 2 | 2 | 2 | 2 | 2 | 2 | 2 |
| | | Vulcanization promoter | | 2 | 2 | 2 | 2 | 2 | 2 | 2 | 2 | 2 | 2 | 2 |
| Evaluation results | Hardness | | | 44 | 44 | 44 | 46 | 47 | 46 | 46 | 46 | 47 | 47 | 43 |
| | Tear strength | | | 47 | 48 | 48 | 47 | 50 | 48 | 50 | 50 | 51 | 51 | 45 |
| | Anti-bending-crack performances | | log (ten thousand times/mm70 %) | 7.5 | 7.0 | 7.0 | 6.8 | 6.8 | 6.8 | 6.7 | 6.6 | 6.3 | 6.3 | 7.8 |
| | | | log (ten thousand times/mm 11 0%) | 6.5 | 6.5 | 6.2 | 6.2 | 6.4 | 6.4 | 6.4 | 6.2 | 6.1 | 6.2 | 6.8 |
| | Ozone resistance | | | B | B | B | A | A | B | B | B | A | A | C |

| | | | | | | | | | | | | | | |
|---|---|---|---|---|---|---|---|---|---|---|---|---|---|---|
| *not according to the invention | | | | | | | | | | | | | | |

Details of the respective blended components used in Examples and Comparative Example are as follows.
(1) natural rubber (NR): TSR20
(2) epoxidized natural rubber (ENR25): "ENR25" manufactured by Kumpulan Guthrie Berhad (epoxidation ratio: 25 mol%)
(3) epoxidized natural rubber (ENR50): "ENR50" manufactured by Kumpulan Guthrie Berhad (epoxidation ratio: 50 mol%)
(4) silica: "Ultrasil VN3" manufactured by Tegussa Co. (BET specific surface area: 175 m²/g)
(5) silane coupling agent: "Si69" manufactured by Tegussa Co. (bis(3-triethoxysilylpropyl) tetrasulfide)
(6) antioxidant: "Nocrack 6C" manufactured by Ouchi Shinko Chemical Industry Co., Ltd. (N-(1,3-dimethylbutyl)-N'-phenyl-p-phenylenediamine)
(7) stearic acid: stearic acid "Tsubaki" manufactured by Nippon Oil and Fat Co., Ltd.
(8) zinc white: "Zinc white No. 1" manufactured by Mitsui Metal Mining Industry Co., Ltd.
(9) sulfur: powder sulfur manufactured by Tsurumi Chemical Industry Co., Ltd.
(10) vulcanization promoter: "Nocceler CZ" manufactured by Ouchi Shinko Chemical Industry Co., Ltd. (N-cyclohexyl-2-benzothiazolylsulfeneamide)
(11) PX300N: "PX300N" manufactured by Yasuhara Chemical Co., Ltd. (terpene-based hydrocarbon resin: 100% (C₁₀H₁₆)ₙ, number-average molecular weight: 50,000)
(12) LIR: "LIR-250" manufactured by Kuraray Co., Ltd. (liquid polyisoprene rubber, number-average molecular weight: 50,000)
(13) LNR: liquid natural rubber manufactured by Kuraray Co., Ltd.
(14) H-LIR: "LIR-290" manufactured by Kuraray Co., Ltd. (hydrogenated product of liquid polyisoprene rubber, number-average molecular weight: 40,000)
(15) H-LNR: which is a hydrogenated product of liquid natural rubber prepared as follows. First, 1 kg of natural rubber (KR7) was put into 1 kg of 2N NaOH, followed by a pressurization treatment in an autoclave (95°C, 3h, 2MPa) to obtain liquid NR. 1 kg of the obtained liquid NR and 20 g of PdCl₂ were dissolved into 2 kg of toluene, followed by a treatment in an autoclave again under conditions of 80°C, 24h, and a hydrogen pressure of 5MPa to obtain H-LNR.

Tests shown below were carried out with respect to the vulcanized rubber sheets of Examples 1 to 10 and Comparative Example 1. The results are shown in Table 1.

### (Hardness)

Hardness was measured with a spring type A in accordance with the "hardness testing method of vulcanized rubber and thermoplastic rubber" of JIS-K6253.

### (Tear test)

Tear strengths (N/mm) were measured with use of an angle-shaped test piece having no cut in accordance with the "method of determining the tear strength-vulcanized rubber and thermoplastic rubber" of JIS-K6252. A larger tear strength indicates a more excellent the anti-crack property.

### (Anti-bending-crack-growing test)

The numbers of times until breakage of 1 mm is generated in the vulcanized rubber sheets were measured under a condition of room temperature of 25°C in accordance with the "de Mattia bending crack growth testing method of vulcanized rubber and thermoplastic rubber" of JIS-K6260, and the obtained numbers of times were represented in logarithms. A larger numerical value indicates a more excellent anti-bending-crack performance. The ratios of 70% and 110% shown in Table 1 indicate elongation ratios relative to the original lengths of the vulcanized rubber sheets.

### (Ozone resistance test)

Ozone resistance was evaluated under conditions of a frequency of reciprocal movement of 0.5 ± 0.025 Hz, an ozone concentration of 50 ± 5 pphm, 40°C, 48 hours in accordance with the "method of determining the ozone resistance - vulcanized rubber and thermoplastic rubber" of JIS-K6259. In Table 1, symbol A indicates that few cracks are present; symbol B shows that the number of cracks is large; and symbol C shows that the number of cracks is considerably large.

Although the present invention has been described and illustrated in detail, it is clearly understood that the same is by way of illustration and example only and is not to be taken by way of limitation, the scope of the present invention being interpreted by the terms of the appended claims.

## Claims

1. A rubber composition for side walls, containing:
100 parts by mass of a first rubber component consisting of 30 to 70 mass % of natural rubber and 70 to 30 mass % of epoxidized natural rubber;
20 to 60 parts by mass of silica; and
3 to 60 parts by mass of a second rubber component consisting of liquid rubber, wherein the liquid rubber is a hydrogenated product of depolymerized natural rubber.

2. A method of producing the rubber composition for side walls according to claim 1, comprising:
a first mixing step of kneading at least natural rubber and silica; and
a second mixing step of mixing epoxidized natural rubber with a kneaded product obtained in said first mixing step

3. The method of producing the rubber composition for side walls according to claim 2, wherein the kneaded product obtained in said first mixing step is mixed with a kneaded product consisting of epoxidized natural rubber and liquid rubber in said second mixing step.

4. A pneumatic tire provided with a side wall rubber consisting of the rubber composition according to claim 1.

## Patentansprüche

1. Kautschukmischung für Seitenwände, enthaltend:
100 Masseteile einer ersten Kautschukkomponente, die aus 30 bis 70 Masse-% Naturkautschuk und 70 bis 30 Masse-% epoxidiertem Naturkautschuk besteht;
20 bis 60 Masseteile Silica; und
3 bis 60 Masseteile einer zweiten Kautschukkomponente, die aus flüssigem Kautschuk besteht, wobei der flüssige Kautschuk ein hydriertes Produkt aus depolymerisiertem Naturkautschuk ist.

2. Verfahren zum Herstellen der Kautschukmischung für Seitenwände nach Anspruch 1, umfassend:
einen ersten Mischschritt eines Knetens zumindest von Naturkautaschuk und Silica; und
einen zweiten Mischschritt eines Mischens epoxidierten Naturkautschuks mit einem gekneteten Produkt, das in dem ersten Mischschritt erhalten wird.

3. Verfahren zum Herstellen der Kautschukmischung für Seitenwände nach Anspruch 2,
wobei das geknetete Produkt, das in dem ersten Mischschritt erhalten wird, mit einem gekneteten Produkt, das aus epoxidiertem Naturkautschuk und flüssigem Kautschuk besteht, in dem zweiten Mischschritt gemischt wird.

4. Luftreifen, der mit einem Seitenwandkautschuk versehen ist, der aus der Kautschukmischung nach Anspruch 1 besteht.

## Revendications

1. Composition de caoutchouc pour parois latérales, contenant :
100 parties en masse d'un premier composant de caoutchouc constitué de 30 à 70 % en masse de caoutchouc naturel et de 70 à 30 % en masse de caoutchouc naturel époxydisé ;
20 à 60 parties en masse de silice ; et
3 à 60 parties en masse d'un second composant de caoutchouc constitué de caoutchouc liquide, dans lequel le caoutchouc liquide est un produit hydrogéné de caoutchouc naturel dépolymérisé.

2. Procédé pour produire la composition de caoutchouc pour parois latérales selon la revendication 1, comprenant :
une première étape de mélange consistant à pétrir au moins du caoutchouc naturel et de la silice ; et
une seconde étape de mélange consistant à mélanger du caoutchouc naturel époxydisé avec un produit pétri obtenu dans ladite première étape de mélange.

3. Procédé pour produire la composition de caoutchouc pour parois latérales selon la revendication 2, dans lequel le produit pétri obtenu dans ladite première étape de mélange est mélangé avec un produit pétri constitué de caoutchouc naturel époxydisé et de caoutchouc liquide dans ladite seconde étape de mélange.

4. Bandage pneumatique doté d'un caoutchouc de paroi latérale constitué de la composition de caoutchouc selon la revendication 1.
